# EUROPEAN PATENT APPLICATION

(11) **EP 3 086 083 A1**
(43) Date of publication of application: **26.10.2016**
(21) Application number: 15382196.2
(22) Date of filing: 21.04.2015
(51) Int. Cl.: G01B 11/24, B23K 26/03

(54) **METHODS AND SYSTEMS FOR INSPECTING BEADS OF A SEALANT MATERIAL IN JOINING AREAS OF STRUCTURAL ELEMENTS**

(71) Applicant: Airbus Defence and Space, S.A., 28906 Getafe (Madrid) (ES)
(72) Inventor: Esteban Finck, Fernando Enrique, 28906 Getafe (ES); Campos, Cristóbal, 28906 Getafe (ES); Rico Iglesias, Daniel, 28906 Getafe (ES); Aragón Aguilar, Miguel Ángel, 28906 Getafe (ES)
(74) Representative: Elzaburu S.L.P.

(57) **Abstract**

A method for inspecting a bead (11) of a bi-component sealant material in joining areas of structural elements comprising the following steps: a) projecting continuously on the application area of the bead (11) a laser light curtain (33) of a width greater than the bead width; b) taking sequentially digital images (41) of the application area of the bead (11) in a direction angularly offset with respect to the projecting direction of the laser light curtain (33); c) processing the information provided by the intersecting lines (43) of the laser light curtain (33) with the application area of the bead (11) contained in said digital images (41) to detect defects of the bead (11) and/or to obtain digital representations of the bead (11) to allow a posteriori analysis of it. The invention also refers to a system for inspecting said bead (11).

## Description

### FIELD OF THE INVENTION

The present invention relates to methods and systems for inspecting beads of sealant in joining areas of structural elements and particularly in joining areas of structural elements of aircraft structures.

### BACKGROUND

The sealant material used in the beads applied to joining areas of structural elements in the aerospace and other industries is a bi-component material (base and catalyst) of very high viscosity. The mixture of both components must be performed ensuring the correctness of the proportion of each component to guarantee the quality of the sealant material.

Since the mixing of the two components initiates the solidification of the sealant material various methods have being used for applying beads of sealant material to aircraft structures.

The most commonly used is the application of the bead of sealant material by means of a small pneumatic gun that extrudes the sealant material contained in a cartridge through a nozzle. These cartridges are filled with a mixture of the two components carried out in industrial premises handling large amounts and subsequently frozen to halt the curing reaction. Previously to their use in a pneumatic gun they are defrosted.

Automated methods for applying beads of sealant material are known such as that described in patent application ES 2 264 892 A1 in which a robotic arm is used to move and handle a device for applying beads with the sealant material contained in a cartridge which was pre-filled with the mixture of its two components.

Whether applied manually or automatically the sealant beads shall be inspected to ensure that they meet the quality standards established for this purpose.

Known inspection methods are basically manual methods that are especially inappropriate for beads applied by robots because they increase the chances of a late detection of defective beads with the disadvantages that entails.

### SUMMARY OF THE INVENTION

The invention provides a method and a system for inspecting a bead of a bi-component sealing material applied to a given area of a structure in which a union of two elements takes place that can be used both to perform the inspection simultaneously to the application of the bead, particularly if it is made with a robot, or subsequently to the application of the bead.

The method comprises the following steps: a) projecting continuously on the application area of the bead a laser light curtain of a width greater than the bead width; b) taking sequentially, with a certain frequency, digital images of the application area of the bead from a position that can focus the application area of the bead in a direction angularly offset with respect to the projecting direction of the laser light curtain; c) processing the information provided by the intersecting lines of the laser light curtain with the application area of the bead contained in said digital images to detect defects of the bead and/or to obtain digital representations of the bead to allow a posteriori analysis of it.

The system comprises an emitting device of a laser light curtain and a digital camera arranged in a movable device along the application area of the bead. Said emitting device is placed in a suitable position to project said laser light curtain over the application area of the bead. Said digital camera is placed in a suitable position to focus the application area of the bead in a direction angularly displaced with respect to the projection direction of the laser light curtain to take digital images of the application area of the bead sequentially, at a predetermined frequency. The system also comprises a computer system that includes a computer connected to said digital camera for receiving said digital images and a software adapted to process the information provided by the intersecting lines of the laser light curtain with the application area of the bead contained in said digital images to detect defects of the bead and/or to obtain digital representations of the bead allowing a posteriori analysis of it.

Other desirable features and advantages of this invention will become apparent from the subsequent detailed description of the invention and the appended claims, in relation with the enclosed drawings.

### BRIEF DESCRIPTION OF THE FIGURES

Figures 1 a and 1 b are perspective views of two beads of sealant material complying and not complying, respectively, with the established standards.
Figure 2 is a perspective view of the end-effector of a robotic arm that includes the means used for bead inspecting.
Figure 3 is a perspective view of an aircraft structure on which a bead of sealant material is applied showing the image of one of the intersection lines of a laser light curtain with the bead application area that is used to inspect the bead.

### DETAILED DESCRIPTION OF THE INVENTION

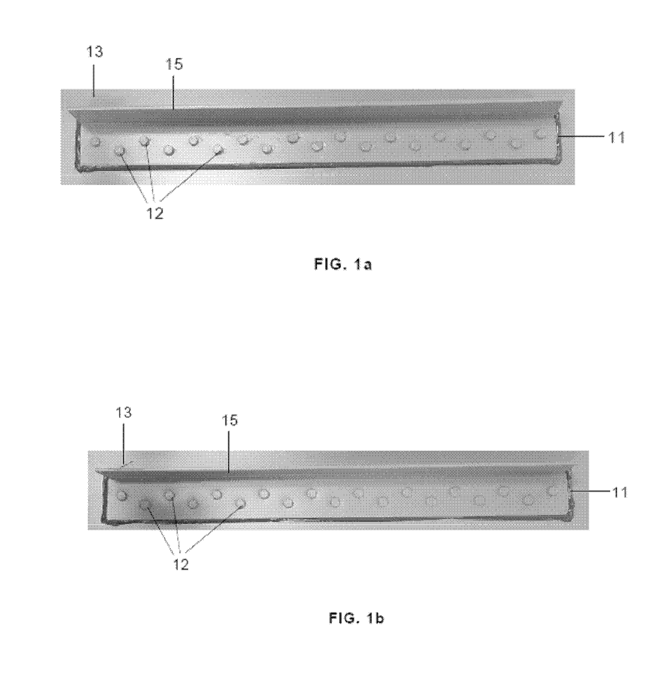

Figures 1 a and 1b show a bead 11 applied around a stiffening element 15 attached to another structural element 13 by rivets 12.

The bead 11 of Figure 1 a meets the quality standards and the bead 11 of Figure 1b does not because its width or height is lesser than those pre-established by the standards in several areas.

To control the quality of beads 11 such as those of Figure 1a detecting defects such as those shown in Figure 1b the invention provides a method and system that we describe below for the case where the inspection is carried out simultaneously to the application of the bead.

### The method

The method of the invention makes use of an applicator device 21 arranged on the end-effector 23 of a robot programmed to move said end-effector 23 along the application area of the bead 11. Said applicator device 21 applies the bead 11 receiving the two components of the sealing material from non-shown supply means.

The inspection of the bead 11 is carried out by means of the following steps:
- Projecting a laser light curtain 33 onto the application area of the bead 11 from an emitting device 31 arranged on the robot end-effector 23.
- Taking sequentially, with a certain frequency, digital images 41 of the application area of the bead 11 by a digital camera 35 arranged in the robot end-effector 23 in a suitable position to focus the application area of the bead 11 in a direction angularly offset with respect to the direction of the laser light curtain 33.
- Processing the information provided by the intersection lines 43 of the laser light curtain 33 with the application area of the bead 11 contained in the digital images 41 to control the bead quality. In this respect two basic processes are envisaged: firstly, a process for detecting defects (for example width or height of the bead below preset limits) comparing the information provided by said intersecting lines 43 with bead pattern references for, if needed, interrupting the application of the bead 11 and solve the problem that causes the defect and, secondly, a process for obtaining 2D or 3D digital representations of the applied bead for a posteriori analysis for finding improvements of the application process.

### The system

The system comprises a robotic subsystem, a supply subsystem and an inspection subsystem.

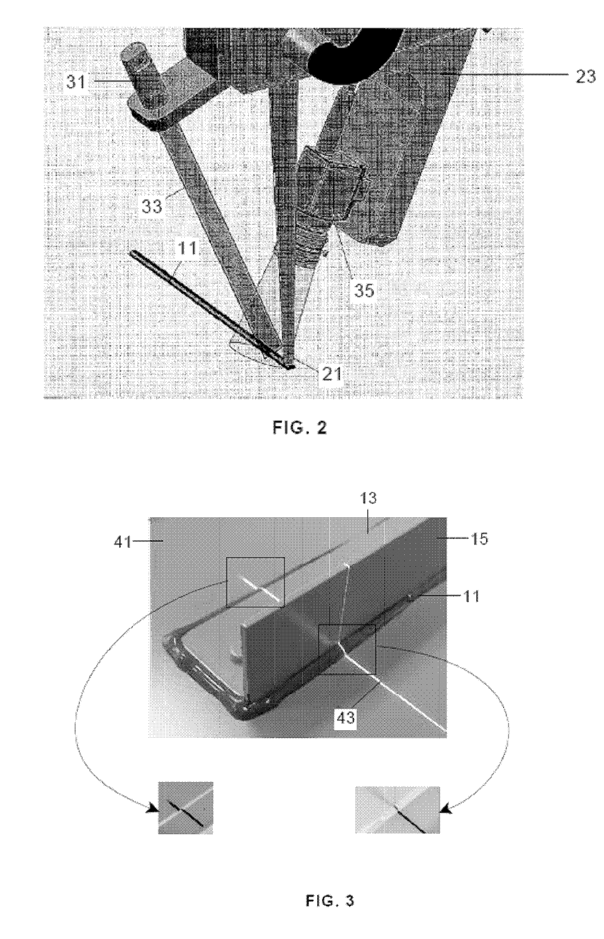

The robotic subsystem (see Figure 2) comprises a robotic arm with an applicator device 21 of sealant material in the end-effector 23 and the necessary means to move the end-effector 23 along the application area of the bead 11 and to control the correct dispensing of the sealant material in coordination with the speed of the robotic arm. In this regard, the robot shall have the geometrical information of the application area of the sealant material and be programmed to follow the path corresponding to the bead with high accuracy in position and velocity.

The supply system (not shown) carries to the applicator device 21 the two components of the sealing material.

The inspection subsystem (see Figures 2 and 3) comprises an emitting device 31 of a laser light curtain 33 and a digital camera 35 disposed in the end-effector 23 of the robot in different positions so that the digital camera 35 can focus the application area of the bead in a direction angularly offset with respect to the direction of the laser light curtain 33 and a computer system comprising a computer which is connected to the digital camera 35 and a software intended to control the quality of the bead 11 processing images taken sequentially, with a certain frequency, by the digital camera 35 during the application of the bead 11. In each of these digital images 41 is visible the intersection line 43 of the laser light curtain 33 with the application area of the bead 11. Knowing the angular displacement between the digital camera 35 and the emitting device 31 and the width of the base of the stiffening element 15, the width and height of the bead 11 at each point can be obtained from the information provided by said intersection line 43 in the areas signaled in Figure 3. Integrating data from all the intersection lines 43 of the digital images 41 taken during the application of the bead 11, 2D or 3D representations of the same can be obtained to analyze in detail its characteristics. Any defect during application of the bead 11 can also be detected comparing the above mentioned data obtained from digital images 41 with pattern bead data. The detection of a defect allows interrupting the application of bead 11 to proceed immediately to remedy its cause.

Although the present invention has been described in connection with various embodiments, it will be appreciated from the specification that various combinations of elements, variations or improvements therein may be made, and are within the scope of the invention.

## Claims

1. A method for inspecting a bead (11) of a bi-component sealant material applied to a given area of a structure in which a union of two elements (13, 15) takes place, **characterized by** comprising the following steps:
a) projecting continuously on the application area of the bead (11) a laser light curtain (33) of a width greater than the bead width;
b) taking sequentially, with a certain frequency, digital images (41) of the application area of the bead (11) from a position that can focus the application area of the bead (11) in a direction angularly offset with respect to the projecting direction of the laser light curtain (33);
c) processing the information provided by the intersecting lines (43) of the laser light curtain (33) with the application area of the bead (11) contained in said digital images (41) to detect defects of bead (11) and/or to obtain digital representations of the bead (11) to allow a posteriori analysis of it.

2. A method according to claim 1, wherein said inspection is carried out simultaneously to the application of the bead (11).

3. A method according to any of claims 1-2, wherein the structure on which the bead (11) is applied is an aircraft structure.

4. System for inspecting a bead (11) of a bi-component sealant material applied to a given area of a structure in which a union of two elements (13, 15) takes place, **characterized by** comprising:
- an emitting device (31) of a laser light curtain (33) and a digital camera (35) arranged in a movable device (23) along the application area of the bead (11); the emitting device (31) been placed in a suitable position to project said laser light curtain (33) over the application area of the bead (11); the digital camera (35) been placed in a suitable position to focus the application area of the bead (11) in a direction angularly displaced with respect to the projection direction of the laser light curtain (33) to take digital images (41) of the application area of the bead (11) sequentially, at a predetermined frequency;
- a computer system that includes a computer connected to said digital camera (35) for receiving said digital images (41) and a software adapted to process the information provided by the intersecting lines (43) of the laser light curtain (33) with the application area of the bead (11) contained in said digital images (41) to detect defects of the bead (11) and/or to obtain digital representations of the bead (11) allowing a posteriori analysis of it.

5. System according to claim 4, wherein said movable device (23) is the end-effector of the arm of a robot having means to displace it along the application area of the bead (11), the movable device (23) also comprising an applicator device (21) of sealing material connected to supply means of the same, so that the inspection of the bead (11) is carried out immediately after its application by said applicator device (21).

6. System according to claim 5, wherein said applicator device (21) is arranged so as the application of the bead (11) can be interrupted if any defect of the same is detected by said computer system.

7. System according to any of claims 4-6, wherein the structure on which the bead (11) is applied is an aircraft structure.
